# EUROPEAN PATENT APPLICATION

(11) **EP 4 180 667 A1**
(43) Date of publication of application: **17.05.2023**
(21) Application number: 21208291.1
(22) Date of filing: 15.11.2021
(51) Int. Cl.: F04D 1/00, F04D 29/58, F04D 29/42, B33Y 80/00, F28F 7/02

(54) **HEATING AND/OR COOLING DEVICE HAVING A PUMP INTEGRATED IN A HEAT EXCHANGER**

(71) Applicant: Grundfos Holding A/S, 8850 Bjerringbro (DK)
(72) Inventor: MIKKELSEN, Steen, 8850 Bjerringbro (DK); SØRENSEN, Søren Emil, 8850 Bjerringbro (DK)
(74) Representative: Patentanwälte Vollmann Hemmer Lindfeld Partnerschaft mbB

(57) **Abstract**

The invention refers to a heating and/or cooling device comprising a heat exchanger having at least one heat exchanger body (2) which defines at least two flow paths (40, 42) separated by a wall structure (38) configured for heat transfer between media flowing through these at least two flow paths (40, 42), wherein the heat exchanger body (2) integrally defines at least a part (14) of at least one pump device (15).

## Description

The invention refers to a heating and/or cooling device comprising a heat exchanger.

Those heating and/or cooling devices are for example used in buildings for heating and/or cooling the building or for example for heating domestic water. It is known to use heat exchangers in those heating or cooling systems to transfer heat from one medium to another medium, for example to heat domestic water by use of a liquid heating medium flowing through the primary side of the heat exchanger, whereas the domestic water flows through the secondary side of the heat exchanger. Thus, the heat exchanger offers two flow paths separated from one another. Furthermore, it is known to have pumps in these heating and/or cooling systems to feed the liquid through the heat exchanger.

It is the object of the invention to provide an improved heating and/or cooling device comprising a heat exchanger having a simplified structure and providing a high efficiency.

This object is achieved by a heating and/or cooling device having the features defined in claim 1. Preferred embodiments are defined in the dependent subclaims, the following description and the accompanying drawings.

The heating and/or cooling device according to the invention comprises a heat exchanger having at least one heat exchanger body. The heat exchanger body is a part of the heat exchanger, preferably the essential or main part of the heat exchanger. Preferably, the heat exchanger body is the entire portion of the heat exchanger providing the heat exchanging properties. The heat exchanger body defines at least two separate flow paths. For this the heat exchanger body comprises a wall structure separating the at least two flow paths and allowing a heat transfer between the media flowing through these at least two flow paths. This means the wall structure is configured for a heat transfer, i.e. providing an optimized heat transfer. In particular the wall structure may be made from metal having a high heat conductivity. According to the invention the heat exchanger body integrally defines at least a part of at least one pump device. This allows to at least partly integrate a pump device directly into the heat exchanger body. Preferably, a hydraulic portion of the pump device is at least partly integrated into the heat exchanger body. By at least partial integrating the pump, the device is simplified, since preferably separate connections, like a piping between the pump device and the heat exchanger can be omitted. Furthermore, the efficiency can be improved, since the hydraulic resistance occurring in the system can be minimized. The at least partial integration of the pump into the heat exchanger body allows an optimized hydraulic connection between the pump device and at least one flow path inside the heat exchanger body. The heat exchanger body according to the invention may comprise a part of one pump device or integrated portions of two or more pump devices. For example, there may be arranged a pump device in only one of the flow paths of the heat exchanger or for example in two flow paths of the heat exchanger. Furthermore, in case that the heat exchanger provides more than two flow paths it would also be possible to arrange pumps in several or all of the flow paths.

In addition, the heat exchanger body may integrally define at least one part or portion of at least one valve device and/or at least one sensor device. The valve for example may be a valve switching the flow between two possible flow paths or a valve adjusting and mixing ratio of two flows in the heat exchanger body. Nevertheless, all other kinds of necessary valves may be incorporated into the heat exchanger body. The sensor device for example may be a pressure and/or temperature sensor. Nevertheless, any kind of sensor device may be integrated into the heat exchanger body, like for example ultrasound sensors, flow sensors having a pedal wheel, etc. In those sensors for example walls configured for signal reflection or the mountings for a pedal wheel may be formed integrally with the structure of the heat exchanger body. The heat exchanger body may in particular define a receiving space or receptacle for at least one pump device and/or for at least one valve device and/or for at least one sensor device. For example, the impeller of a pump may be inserted into a receiving portion or space formed in the heat exchanger body. Alternatively, or in addition a sensor element may be placed in a sensor receiving space formed in the heat exchanger body and/or a part of a valve device, like a moveable valve element may be inserted into a valve receiving space formed in the heat exchanger body. Nevertheless, it has to be understood that also other parts of the described devices may be integrally defined in the heat exchanger body.

The heat exchanger body is integrally formed and preferably formed in one piece. This minimizes the number of assembly steps of the heat exchanger body and avoids interfaces inside the heat exchanger body to be sealed. Further preferably, the heat exchanger body is manufactured in a primary forming process. Such a primary forming process allows to form the heat exchanger with a complex geometry as an integral structure or preferably a structure in one piece. Further preferred, the forming process may be an additive manufacturing process allowing to produce complex structures without the need of moulds or cores. The additive manufacturing preferably may be a 3D-printing or selective laser sintering or selective laser melting process. However, any suitable primary forming process or additive manufacturing process may be used to produce the structure of the heat exchanger body, preferably in one piece. The additive manufacturing process allows to produce complex structures defining the at least two flow paths in the interior of the heat exchanger body without the need of cores as in a moulding process. Furthermore, more complex structures can be produced.

According to a preferred embodiment the at least two flow paths inside the heat exchanger body are at least partly defined by a lattice structure and further preferred by a TPMS (Triply Periodic Minimal Surface) structure. Such a lattice structure or preferably a TPMS structure provide an improved heat transfer between the at least two flow paths with a minimized volume of the heat exchanger body. Preferably the heat transfer surfaces between the two flow paths can be maximized by such a structure to improve the heat transfer from one media to the other. Thus, the efficiency of the heat exchanger can be improved. A lattice structure and preferably a TPMS structure may be produced by aforementioned additive manufacturing process, for example.

Preferably the structure of the heat exchanger body, in particular a lattice structure or preferably a TPMS structure forms a basic structure inside the heat exchanger body so that the flow paths with the separating wall structure fills out the volume of the heat exchanger body. A TPMS structure for example may be a Diamond structure, a Gyroid structure or a Schwarz P surface structure which are preferable for use in a heat exchanger.

According to a preferred embodiment there is provided at least one separating wall and/or diverter element arranged inside at least one of the flow paths and configured such that it lengthens the flow path. This separating wall or diverter element diverts or deflects the flow so that the way the flow takes along the flow path is lengthened. For example, such separating wall or diverter element may constitute a wound or serpentine flow path within the space limited by the wall structure of the heat exchanger body.

According to a further embodiment the at least one pump device is a centrifugal pump having at least one rotatable impeller. Such a pump may for example be used as a circulator pump inside the heating or cooling system, for example for circulating a heating medium in one of the flow paths.

Preferably, at least the portion of a pump housing of the at least one pump device is integrally formed with the heat exchanger body and preferably being manufactured by additive manufacturing as described above. The pump housing delimits the space inside which the impeller of the centrifugal pump is located. Thus, the pump housing defines a wall delimiting the space surrounding the impeller and preferably defining a part of the flow paths towards to and/or away from the impeller, for example a spiral housing surrounding the outlet side of the impeller and guiding the fluid leaving the impeller. A wall or a portion of the wall defining this pump housing may be integrally formed, in particular formed in one piece with the heat exchanger body. This simplifies the layout of the entire heating device, since the number of necessary components is reduced and, thus, there are less assembling steps. Furthermore, the flow paths through the pump device and the heat exchanger body can be optimized to reduce the hydraulic resistance.

According to a further possible embodiment the pump housing defines at least one fluid connection directly connected to one of the flow paths defined inside such heat exchanger body. This means there may be at least one opening, preferably several openings, connecting the interior of the pump housing with at least one of the flow paths defined in the heat exchanger body, preferably by a lattice structure as defined above. The direct connection of the interior of the pump housing to the flow paths inside the heat exchanger body is of advantage if the pump device is used to feed or circulate a fluid or liquid through one of the flow paths inside the heat exchanger body, for example a heating medium. The direct connection of the interior of the pump housing and at least one of the flow paths simplifies the design, avoids assembly steps and allows a hydraulic optimization of the flow paths from the pump device into the interior of the heat exchanger, i.e. the flow path in the interior of the heat exchanger body. In particular there may be a direct connection between the pressure side of the pump device, which is defined by the pump housing and at least one of the flow paths in the interior of the heat exchanger body.

According to a further possible embodiment an electric drive motor of a pump device is connected to said heat exchanger body, preferably by at least one screw, bolt, clamp, or strap. Those connecting elements may be engaged with said heat exchanger body. For example, a screw may engage into a thread formed in a wall or portion of the heat exchanger body. Preferably a pump head consisting of the drive motor with the connected impeller is attached to the heat exchanger body such that the impeller is inserted into a pump housing integrally formed in said heat exchanger body. This allows a simple assembling, and the moveable components of the pump device can easily be removed, for example for maintenance or repair.

Furthermore, in addition to the at least two flow paths at least one pipe or tube, e. g. a flow channel, and/or flow distribution elements may be provided inside said heat exchanger body, wherein said pipe or tube for example connects a sensor with a distanced portion of a flow path or serves as an inlet or outlet channel. This allows to provide a fluid connection between the sensor and distant portions of the flow paths inside the heat exchanger body. This may in particular be advantageous for a pressure sensor, if the pressure sensor is used as a differential pressure sensor detecting a pressure difference between two points in the flow paths, for example between an inlet and an outlet to detect the differential pressure, i.e. the pressure loss across the flow path between inlet and outlet. For example, the pressure sensor may be arranged inside a sensor receptacle which is arranged for example on the outlet side of a flow path, and pipe, or channel inside said heat exchanger body connects the sensor receptacle with the inlet side of the flow path allowing to detect the pressure difference. Vice versa, a sensor receptacle may also be situated on the inlet side of the flow channel or somewhere between the inlet and the outlet so that both the inlet and the outlet are connected to the sensor receptacle via a pipe or connection channel integrally formed inside said heat exchanger body. In particular, in case that the heat exchanger body is manufactured in a primary forming process, preferably by additive manufacturing, it is easily possible to produce additional tubes or pipes inside the one piece structure of the heat exchanger body. Additionally flow channels of flow distribution elements in form of pipes or tubes inside the integrally formed structure of the heat exchanger body may be defined by additional walls within the structure separating those tubes or pipes or channels from the flow path defined by the structure. In case that the wall structure of the heat exchanger body is the supporting structure of the heat exchanger body, those additional separating walls may be relative seen walls, since they are supported by the surrounding wall structure of the heat exchanger body. In case of flow distribution elements formed by further walls there may be provided holes in the walls towards the flow path inside the wall structure of the heat exchanger body.

According to a further possible embodiment the pump device is placed in the middle region of one of the two flow paths and is configured for feeding liquid through this flow path. The arrangement of the pump in the middle region of the flow path ensures an optimized pressure profile along this flow path. A first portion of the flow path is connected to the inlet side of the pump device, i.e. the suction side, whereas the second portion of the same flow path is connected to the outlet or pressure side of the pump device. Both portions of the flow path may end in openings in a wall of a pump housing, preferably integrally formed with the structure of the heat exchanger body. However, the arrangement in the middle region does not mean that the arrangement is limited to arrange an arrangement with a flow path upstream and downstream the pump having the same length. The pump device may be placed in other regions of the flow path. In an alternative embodiment it would be possible to place the pump device for example at the end of the flow path or at the beginning of the flow path. The arrangement at the beginning or entry side of the flow path may be advantageous, since this arrangement allows to pressurize the fluid before entering the structure.

A at least one sensor device arranged inside the heating and/or cooling device, in particular inside the heat exchanger body may be a temperature, a flow and/or pressure sensor, for example a differential pressure sensor as explained above. The sensor may be a combined sensor detecting two or more parameters, for example pressure and flow, pressure and temperature or pressure, flow and temperature. Nonetheless, any kind of sensor for detecting properties of a fluid inside one of the flow paths, may be integrated into the heat exchanger body.

Preferably, said heat exchanger body defines or forms at least one valve or sensor housing or valve or sensor receptacle, respectively, which valve or sensor housing is connected to or arranged inside at least one of the flow paths defined in said heat exchanger body. Such sensor receptacles or spaces may be integrally formed inside the wall structure of the heat exchanger body. This allows to detect properties of a fluid flowing inside the flow path directly inside the interior of the heat exchanger body.

A valve insert may be placed inside said valve housing and/or a sensor insert may be placed inside a said sensor housing. Said valve or sensor housing defines a fluid channel bringing the fluid into contact with the respective valve or sensor insert. The valve or sensor insert may be configured such that it closes the housing towards the surrounding or outside in a sealed manner. This allows a simple assembling and to easily remove the valve insert or sensor insert, for example for repair or maintenance.

According to a further possible embodiment a bluff body of a vortex flow sensor may be formed integrally with said heat exchanger body. This means a bluff body may be formed inside a flow path integrally formed in said heat exchanger body. Furthermore, the flow paths may have an opening or receptacle for a pressure sensor allowing the flow detection by interaction with the bluff body. Thus, a vortex flow sensor can easily be integrated into said heat exchanger body.

Preferably, the pump device is arranged in one of the flow paths for feeding liquid or fluid though said flow paths, the pump device comprising a control device connected to at least one sensor arranged in one of the at least two flow paths, wherein the control device preferably is arranged in a motor housing of the pump device or in an electronics housing attached to the motor housing of the pump device. Alternatively, the control device may be located in a separate electronics box. The control device allows a control of the pump based on sensor signals received form the at least one sensor. Preferably, the entire control electronics for the heat exchanger and, preferably the entire heating and/or cooling device is arranged inside the motor housing or an electronic housing of the pump device. The sensors and/or valves arranged in or around the heat exchanger may be connected to the control electronics by wire or wireless. This allows to provide an integrated heat exchanger device comprising all necessary components of the heat exchanger for controlling the heat exchange between two media flowing through the heat exchanger and in particular through the heat exchanger body.

A preferred embodiment of the invention is described by way of example with reference to the accompanying figures. In these:
- Figure 1: is an explosive view of a heating device according to the invention,

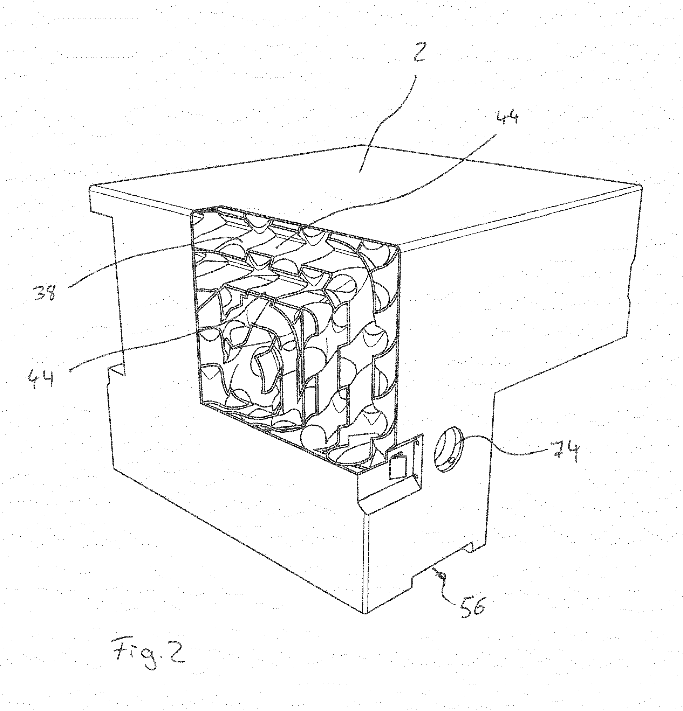

- Figure 2: is a partial sectional view of the heat exchanger body of the heating device according to figure 1,
- Figure 3: is a partial sectional view of the heat exchanger body according to figure 2 and 3,

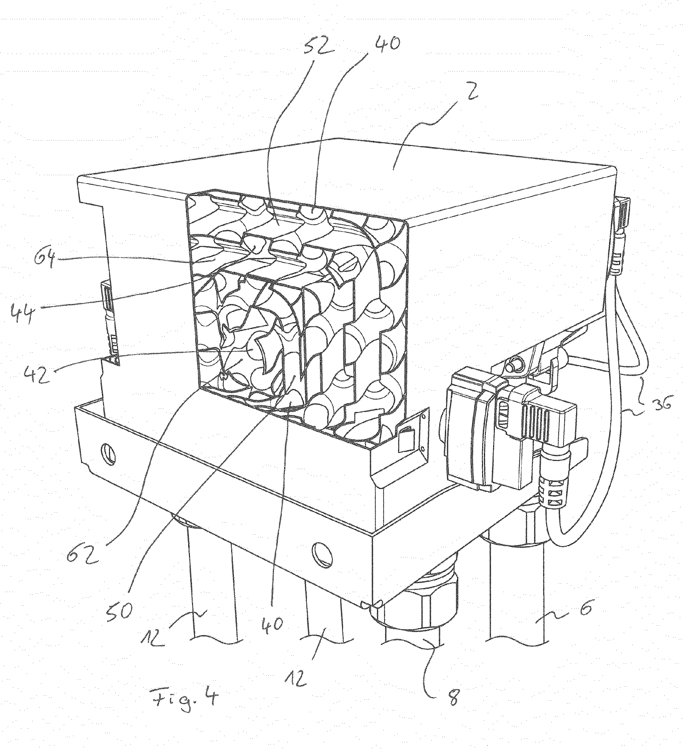

- Figure 4: is a partial sectional view of the heating device according to figure 1,
- Figure 5: is a partial sectional view of the heating device according to figures 1 to 4 seen from another side,
- Figure 6: is a schematical view of additional fluid channels inside the heat exchanger body according to a first alternative,
- Figure 7: is a schematical view of additional flow channels inside the heat exchanger body according to a second alternative,
- Figure 8: shows the basic TPMS structure of the heat exchanger body and
- Figure 9: is an enlarged view of an alternative TPMS structure.

In the following there is described a heating device as an example. The heating device may be used in similar way as a cooling device or as a device which is suitable for heating as well as for cooling.

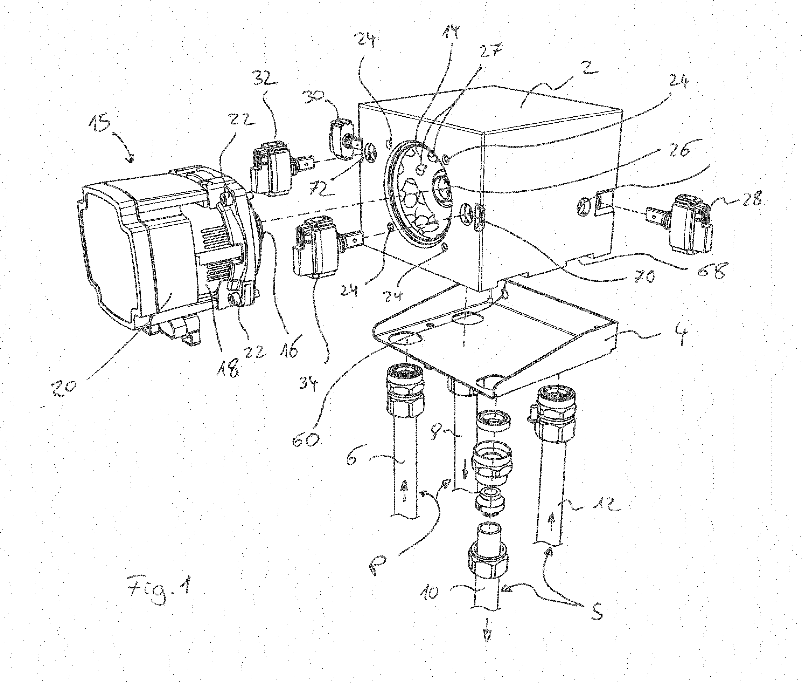

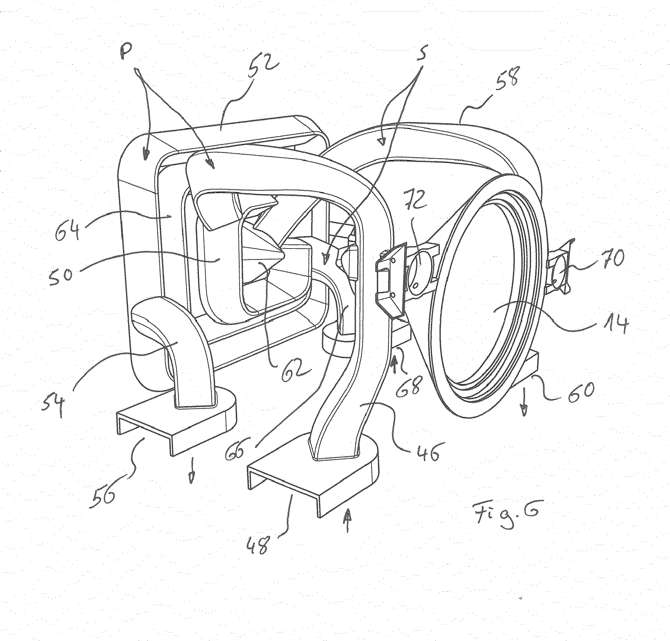

The essential part of a heating device is a heat exchanger. The heat exchanger comprises a heat exchanger body 2 defining the main or basic structure of the heat exchanger, in particular providing two separate flow paths with a wall structure therebetween allowing a heat transfer from a medium in a first flow path to a medium in the second flow path. The heat exchanger body is mounted on a support plate 4 for fitting the heat exchange for example on a wall. The heat exchanger body, furthermore, is connected with four supply pipes 6, 8, 10 and 12. The supply pipes 6 and 8 are connected to a first flow path, the primary flow path P in the heat exchanger body 2 and the supply pipes 10 and 12 to a secondary flow path S inside said heat exchanger body 2. The supply pipe 6 for example is an inlet pipe for a heating circuit and the supply pipe 8 the outlet pipe of the heating circuit, as indicated by the arrows in the figures 1 and 6. The supply pipe 12 may be the inlet for domestic water and the supply pipe 10 may be the outlet pipe for heated domestic water, as indicated by the arrows in figures 1 and 6.

Inside the heat exchanger body 2 there is integrally formed a pump housing 14 accommodating an impeller 16 of a pump device 15. The impeller 16 is arranged on a rotor shaft of the pump device 15. In this embodiment the pump device comprises a motor housing 18 with an electric drive motor arranged inside. On one axial end of the motor housing 18 there is placed an electronics housing 20 inside which there is arranged a control device for the pump device in particular controlling the drive motor inside the motor housing 18. On the opposite axial end there is arranged the impeller 16. The motor housing 18 and the electronics housing 20 together with the impeller 16 constitute a pump head which is connected to the heat exchanger body 2 by screws 22 engaging into screw holes 24 provided in the outer wall of the heat exchanger body 2.

In the center of the pump housing 14 there is an inlet or suction opening 26 engaging with a suction mouth of the impeller 16 when the impeller is inserted into the pump housing 14 and the motor housing 18 is connected to the heat exchanger body 2 via screws 22. The interior space of the pump housing 14 forms a pressure space surrounding the impeller 16 and having openings 27 towards a flow path inside the heat exchanger body 2.

Furthermore, there are arranged several sensors 28, 30, 32 and 34. These sensors engage into sensor receptacles or sensor housings inside the heat exchanger body 2 to detect properties of the liquid inside the flow paths formed in the heat exchanger body 2. In this example the sensor 28 and the sensor 30 are differential pressure sensors. Sensor 32 is a temperature sensor and sensor 34 is a combined temperature and flow sensor. The sensors are connected to the control device or control electronics inside the electronics housing 20, in this example via cables 36. The control electronics receives the sensor signals and is configured to perform a control of the drive motor and of the entire heating device on basis of the received sensor signals. For example, the drive motor of the pump device may be switched on and off and is speed controlled on basis on those sensor signals.

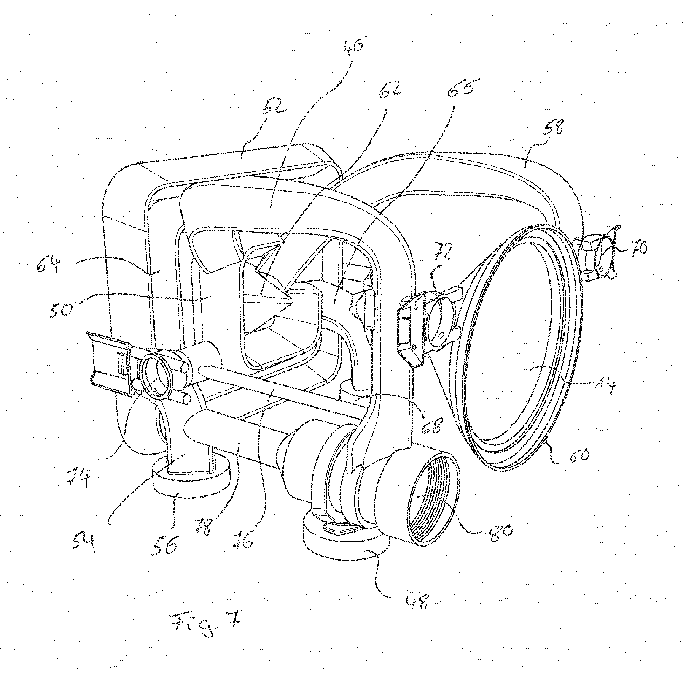

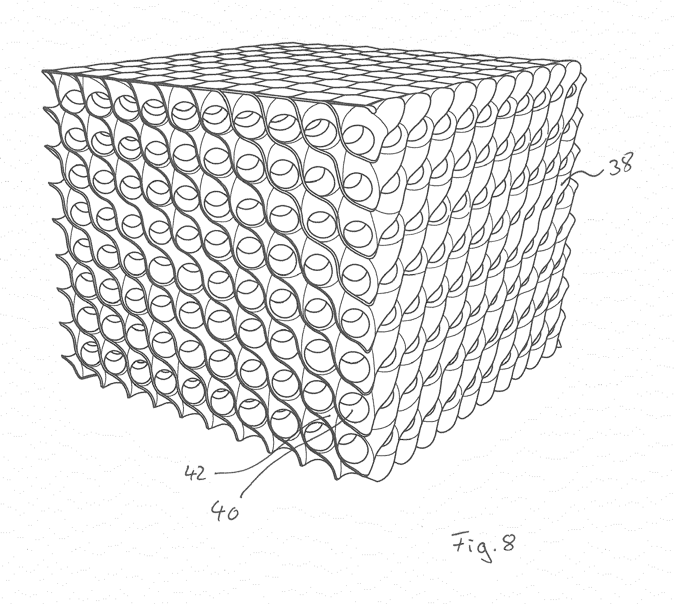

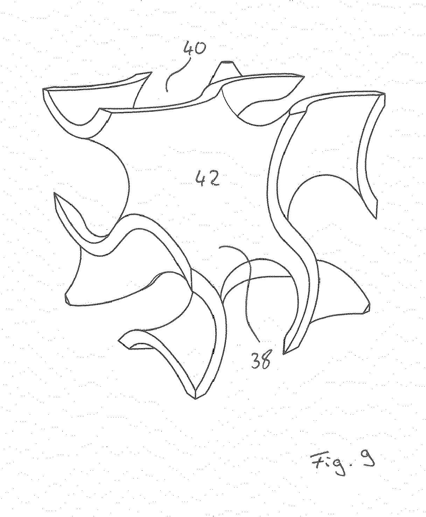

The heat exchanger body 2 is a structure integrally formed, i.e. a structure essentially formed in one piece by an additive manufacturing method, preferably 3D-printing. The wall structure 38 inside the heat exchanger body 2 defines two separate flow paths separated by the wall structure 38. The wall structure 38 in this example forms a lattice structure in form of a TPMS (triply periodic minimal surface) structure. In this structure as seen as an example in figure 8 and figure 9 the wall or wall structure 38 separates the two flow paths 40 and 42. The entire structure is made from metal or a plastic material having a high heat conductivity and ensuring a good heat transfer from the medium in one flow path 40 towards a medium in flow path 42 through the wall structure 38. The wall structure 38 in the TPMS structure has a maximized surface ensuring an excellent heat transfer and ensures as small pressure loss. This TPMS structure provides a great transfer surface in a minimum total volume. Figures 8 and 9 show the basic design of the wall structure 38 in two examples. Figure 8 shows a Diamond structure and figure 9 shows a Gyroid structure which are in particular suitable for use in a heat exchanger. However, different TPMS structures, as for example a Schwarz P surface and others may be used. According to the invention further elements are integrally formed within this structure adapting the flow paths to certain purposes. Inside the TPMS structure defined by the wall structure 38 there are arranged additional walls 44 or separating walls 44 defining special channels and diverter elements which lengthen the flow paths inside this wall structure 38. These special channels are explained with reference to figures 6 and 7 below.

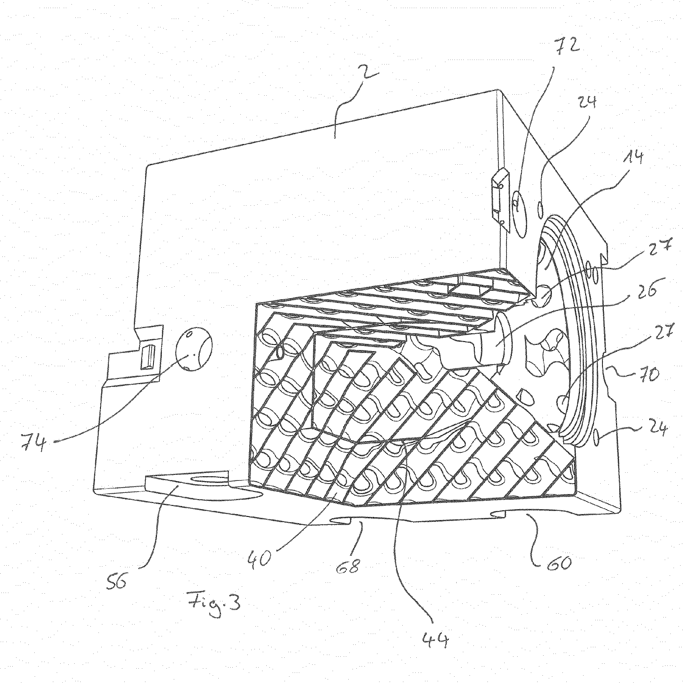

In this embodiment, the pump housing 14 is arranged substantially in a middle portion of one of the flow paths, in this example in a first flow path 40 for a heating medium, for example heated by a boiler, a heat pump or a solar heating system. As can be seen in figure 3 a wall 44 partly separates this flow path 40 such that the flow is deflected or diverted inside the flow path 40 defined by the wall structure 38. Thus, the resulting flow path has a curved or serpentine extension. A first part of the flow path 40 is arranged on the suction side of the pump device 15 and connected to the suction opening 26. The second part is connected to the opening 27 open towards the interior of the pump housing 14. This second part of the flow path 40 forms the pressure side of the flow path connected to the exit side of the pump device 15.

With reference to figure 6 the inlet and outlet channels integrally formed inside the heat exchanger body 2 by additional walls 44 are described in detail. These flow channels are formed integrally with the wall structure 38 but establish separate channels inside this structure acting as inlet and outlet channels. These flow channels are separated from the flow paths inside the structure 38 by additional closed wall 5. In figure 6 there is shown a first channel 46 serving as an inlet channel for a first or primary flow path 40. On one end of this inlet channel 46 there is provided an inlet port 48 to be connected with the supply pipe 6. Close to the back side of the heat exchanger body 2 forming the side facing away from the pump housing 14 the inlet channel 46 forms a flow distribution channel or distribution ring 50 connected with, i.e. having openings towards the first flow path 40 formed inside the TPMS structure defined by the wall structure 38 (not shown in figure 6). This means the inlet channel 46 is in flow connection flow with the flow path 40 inside the wall structure 38 via the flow distribution channel 50. This first flow path 40 is connected to the suction opening 26 of the pump housing 14. As described before a second part of the flow path 40 is connected to the openings 27 on one end and on the other end runs out into a flow distribution channel 52. The flow distribution channel 52 is arranged in the same plane with the flow distribution channel 50 and surrounding the flow distribution channel 50. The flow distribution channel 52 is connected to an outlet channel 54. On the opposite end of the outlet channel 54 there is provided an outlet port 56 connected to the supply pipe 8 as shown in figure 1. Thus, there is provided a first flow path 40 connected via the inlet channel 46 to the supply pipe 6 and via the outlet channel 54 to the supply pipe 8.

Furthermore, there is a second flow path 42 (secondary flow path S) separated from the first flow path 40 by the wall structure 38. Also, this second flow path 42 is connected to the supply pipes 10, 12 via further channels integrally formed in the structure of the heat exchanger body 2, but separated from the flow paths 40 and 42 by closed walls inside the wall structure 38. One of these channels is an outlet channel 58 with an outlet port 60 on one end. The outlet port 60 can be connected to the supply pipe 10. On the other end the outlet channel 58 runs out into a flow distribution portion 62 which is connected with the second flow path 42 inside the TPMS structure formed by the wall structure 38. The flow distribution portion 62 has openings toward the flow path 42. Also, in this second flow path 42 there is arranged a wall 44 as a diverting element lengthening the flow path 42 and diverting the flow path 42 such that it extends towards a flow distribution channel 64 which is arranged in the same plane as the flow distribution channels 50 and 52 and between these flow distribution channels 50 and 52. The flow distribution channel 64 is connected to the inlet channel 66 which runs out in an inlet port 68 which is connected with the supply pipe 12, shown in figure 1.

Figure 6 additionally shows the two sensor housings 70, 72 or sensor receptacles 70, 72, respectively. The sensor housing 70 accommodates the sensor 34 and the sensor housing 72 the sensor 32.

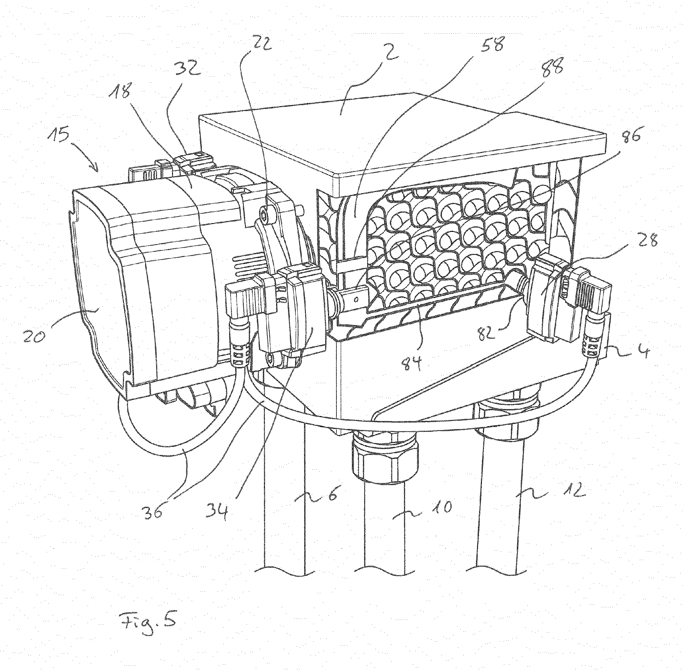

Figure 7 shows an alternative to the channel design described with reference to figure 6. In addition to the design shown in figure 6 there is arranged a sensor housing 74 for accommodating the sensor 30. The sensor housing 74 is connected to the outlet channel 54. The sensor housing 74, additionally is connected with the entrance side of the inlet channel 46 via the connecting tube 76. The sensor housing 74 corresponds to the shape of the sensor 30 such that the sensor 30 can detect a differential pressure between the entrance side of the inlet channel 46 and the outlet channel 54, i.e. the differential pressure across the first flow path inside the heat exchanger body 2. There is a similar sensor arrangement in the second flow path 42 which is described with reference to figure 5 below.

In the embodiment according to figure 7 additionally there is provided a bypass 78 or shunt 78 between the inlet port 48 and the outlet 56. This bypass 78 is connected to a valve housing 80 which may accommodate a valve for regulating the opening of the bypass 78 to ensure a specific temperature of the inlet water of the warm or primary side.

As can be seen in figure 5 the sensor 28, being a differential pressure sensor is inserted into a sensor receptacle or sensor housing 82. The sensor housing 82 is connected to the outlet channel 66. Furthermore, the sensor housing 82 is connected to a connecting tube 84 which runs out into the inlet channel 58 close to the inlet port 60. Thus, the pressure in the inlet channel 58 is transferred into the sensor housing 82 and the sensor 28 can detect the differential pressure between the inlet channel 58 and the outlet channel 66, i.e. the differential pressure across the second flow path 42.

The sensor housing 70 accommodating the sensor 34 is connected to the inlet channel 58 such that a sensing portion 86 of the sensor 34 can extend into the inlet channel 58. Distanced from this sensing portion 86 there is arranged a bluff body 88 inside the inlet channel 58. The bluff body 88 is integrally formed with the wall structure 38. Both, the bluff body 88 and the sensor 34 with the sensing portion 86 constitute a vortex flow sensor measuring or detecting the flow inside the inlet channel 58. For example, the control device inside the electronics housing 20 may detect a flow inside the inlet channel 58 by use of this sensor 34, the flow being a flow of domestic water. This flow signalizes a heat demand by the heat exchanger and the control device may switch on the drive motor of the pump device 15 feeding heating medium through the first flow path 40 inside the heat exchanger body 2 to heat the domestic water flowing through the second flow path 42. The sensor signals of the other sensors may be used to optimize the control of the heating process, in particular by controlling the speed of the drive motor and the impeller 16.

As can be seen the heat exchanger body 2 manufactured in one piece by an additive manufacturing method like 3D-printing integrates all necessary flow paths and flow walls defining the additional channels of the heat exchanger into an integral structure. Due to the TPMS structure of the wall structure 38 a very compact design of the flow paths with a maximum heat exchanging surface between both flow paths is established. Furthermore, the assembling of the entire device is simplified, since only the pump head and the sensors have to be inserted into the respective openings of the heat exchanger body 2.

### Reference numerals

- 2: heat exchanger body
- 4: support plate
- 6, 8, 10, 12: supply pipes
- 14: pump housing
- 15: pump device
- 16: impeller
- 18: motor housing
- 20: electronics housing
- 22: screws
- 24: screw holes
- 26: suction opening
- 27: openings
- 28, 30,32, 34: sensors
- 36: cable
- 38: wall structure, TPMS structure
- 40, 42: flow paths
- 44: walls
- 46: inlet channel
- 48: inlet port
- 50, 52: flow distribution channel
- 54: outlet channel
- 56: outlet port
- 58: outlet channel
- 60: outlet port
- 62: flow distribution portion
- 64: flow distribution channel
- 66: inlet channel
- 68: inlet port
- 70, 72, 74: sensor housings, sensor receptacles
- 76: connecting tube
- 78: bypass, shunt
- 80: valve housing
- 82: sensor housing, sensor receptacle
- 84: connecting tube
- 86: sensing portion
- 88: bluff body
- P: primary side
- S: secondary side

## Claims

1. Heating and/or cooling device comprising a heat exchanger having at least one heat exchanger body (2) which defines at least two flow paths (40, 42) separated by a wall structure (38) configured for heat transfer between media flowing through these at least two flow paths (40, 42), **characterized in that** the heat exchanger body (2) integrally defines at least a part (14) of at least one pump device (15).

2. Heating and/or cooling device according to claim 1, **characterized in that** the heat exchanger body (2) integrally defines at least at least a part (70, 72, 74, 80, 82) of at least one valve device and/or at least one sensor device.

3. Heating and/or cooling device according to claim 1 or 2, **characterized in that** the heat exchanger body (2) is manufactured in a primary forming process and preferably by additive manufacturing, further preferably by 3D-printing or selective laser sintering or selective laser melting.

4. Heating and/or cooling device according to one of the preceding claims, **characterized in that** the at least two flow paths (40, 42) in said heat exchanger body are at least partly defined by a lattice structure and preferably by a TPMS (triply periodic minimal surface) structure (38).

5. Heating and/or cooling device according to one of the preceding claims, **characterized by** at least one separating wall (44) and/or diverter element (44) arranged inside at least one of the flow paths (40, 42) and configured such that it lengthens the flow path (40, 42).

6. Heating and/or cooling device according to one of the preceding claims, **characterized in that** the at least one pump device (15) is a centrifugal pump having at least one rotatable impeller (16).

7. Heating and/or cooling device according to one of the preceding claims, **characterized in that** at least a portion of a pump housing (14) of the at least one pump device (15) is integrally formed with the heat exchanger body (2) and preferably being manufactured by additive manufacturing.

8. Heating and/or cooling device according to one of the preceding claims, **characterized in that** the pump housing (14) defines at least one fluid connection (26, 27) directly connected to one of the flow paths (40, 42) defined inside said heat exchanger body (2).

9. Heating and/or cooling device according to one of the preceding claims, **characterized in that** in addition to the at least two flow paths (40, 42) at least one pipe or tube (76, 84) and/or flow distribution element (50, 52, 62, 64) is provided inside said heat exchanger body (2), wherein the pipe or tube (76, 84) preferably connects a sensor (28, 30) with a distanced portion of a flow path (40, 42).

10. Heating and/or cooling device according to one of the preceding claims, **characterized in that** the pump device (15) is placed in a middle region of one of the two flow paths (40, 42) and is configured for feeding liquid through this flow path (40, 42).

11. Heating and/or cooling device according to one of the preceding claims, **characterized in that** said sensor device (28, 30, 32, 34) is a temperature, flow and/or pressure sensor.

12. Heating and/or cooling device according to one of the preceding claims, **characterized in that** said heat exchanger body (2) defines at least one valve (80) or sensor housing (70, 72, 74, 82) connected to or arranged inside at least one of the flow paths (40, 42).

13. Heating and/or cooling device according to one of the preceding claims, **characterized in that** a valve insert is placed inside said valve housing (80) and/or a sensor insert (28, 30, 32, 34) is placed inside said sensor housing (70, 72, 74, 80).

14. Heating and/or cooling device according to one of the preceding claims, **characterized in that** a bluff body (88) of a vortex flow sensor is integrally formed with said heat exchanger body (2).

15. Heating and/or cooling device according to one of the preceding claims, **characterized in that** the pump device (15) is arranged in one of the flow paths (40, 42) for feeding liquid through said flow path (40), the pump device (15) comprising a control device connected to at least one sensor (28, 30, 32, 34) arranged in one of the at least two flow paths (40, 42), wherein the control device preferably is arranged in a motor housing (18) of the pump device (15) or in an electronics housing (20) attached to the motor housing (18) of the pump device (15).
